# EUROPEAN PATENT APPLICATION

(11) **EP 3 796 501 A1**
(43) Date of publication of application: **24.03.2021**
(21) Application number: 19198782.5
(22) Date of filing: 20.09.2019
(51) Int. Cl.: H02J 1/10

(54) **DUAL POWER SUPPLY SWITCHING CIRCUIT**

(71) Applicant: Carrier Corporation, Palm Beach Gardens, FL 33418 (US)
(72) Inventor: ZARRABI, Jamal, 27700 Les Andelys (FR)
(74) Representative: Dehns

(57) **Abstract**

An automatic power supply selection circuit (1) and a corresponding method for automatically selecting a power supply to power an electronic component (2) are provided. The circuit (1) includes a first current path (3) and a second current path (4), wherein the first current path (3) is connected in parallel with the second current path (4). The first current path (3) includes a positive terminal (8) of a first power supply (5), a reverse biased Zener diode (6), and a first, forward biased, Schottky diode (7) connected in series. The second current path (4) includes a connection point (14) for electrically connecting a positive terminal (15) of an external power supply to the circuit (1), and a second, forward biased, Schottky diode (17) connected in series. The circuit (1) further includes an electronic component (2) in electrical communication with the first and second current paths.

## Description

The present invention relates to an automatic power supply selection circuit and a corresponding method for automatically selecting a power supply to power an electronic component. The invention is particularly useful for, but not limited to, use in vehicles for automatically selecting between power supplies to power one or more of the vehicle's electrical components.

In the field of transportation, it is common for a vehicle to be provided with a battery to power one or more electrical components of the vehicle whilst the vehicle is moving and also to provide an electrical connection to a separate external power supply, e.g. a DC generator, to power the components when the vehicle is stationary, e.g. parked. This allows the components to be powered both when the vehicle is stationary and when the vehicle is in motion.

As part of the circuitry connecting the battery, and where connected, the external power supply to the components, it is known to provide a microprocessor and switches to enable switching between the two sources of power. The microprocessor, and associated software, is arranged to determine the output voltage that is provided to the circuit from the battery and the external power supply, and to determine which of these power supplies should power the components. The microprocessor then controls the switches to ensure that the chosen power supply is electrically connected to the components. These systems can extend the discharge time of the battery by avoiding unnecessary use of the battery when there is another readily available source of power.

Such systems are particularly important in vehicles where the battery also powers a starter motor to start the vehicle's engine. If the battery becomes discharged when the engine is not running, it will not be possible to use the battery to power the starter motor and re-start the engine. Hence, it is important that the circuitry functions correctly and in a timely manner to prevent discharge of the battery when an external source of power is connected to ensure that the battery retains sufficient charge to be able to power the starter motor.

Viewed from a first aspect, the present invention provides an automatic power supply selection circuit for automatically selecting a power supply to power an electronic component, the circuit comprising: a first current path including a positive terminal of a first power supply, a reverse biased Zener diode, and a first, forward biased, Schottky diode connected in series; a second current path including a connection point for electrically connecting a positive terminal of an external power supply to the circuit, and a second, forward biased, Schottky diode connected in series; and an electronic component in electrical communication with the first and second current paths; wherein the first current path is connected in parallel with the second current path.

In the circuit described above, the Zener diode will prevent flow of current from the positive terminal of the first power supply to the electronic component, via the first current path, when a reverse-bias voltage across the Zener diode is less than the Zener voltage of the Zener diode. Conversely, when the reverse-bias voltage across the Zener diode is equal to or greater than the Zener voltage of the Zener diode, the Zener diode will allow current to flow from the positive terminal of the first power supply to the electronic component. In addition, the first and second forward biased Schottky diodes will prevent the return of current to the positive terminal of the first power supply and the connection point, thereby preventing short circuits.

The circuit described above makes it possible to automatically select a power source to power an electronic component without the need for a microcontroller (and associated software) and/or other processing equipment, such as switches and/or one or more voltmeters. Hence, the described circuit provides a simple and cost effective means for automatically selecting a power source. Moreover, more complex arrangements, including e.g. microcontrollers and switches, may fail to correctly select and switch between power sources when needed, at least in part due to their complexity. Therefore, by avoiding the need for these more complex components the circuit can be made more reliable. Accordingly, in an example embodiment, the circuit does not include a microcontroller or other processing means for selecting a power supply to power the electronic component. That is to say, the selection of a power supply is achieved solely by the described current path and diode arrangement.

In an example embodiment, the positive terminal of the first power supply is electrically connected to a cathode of the Zener diode. An anode of the Zener diode may be electrically connected to an anode of the first Schottky diode. Optionally, the first current path may only include the first power supply, Zener diode and the first Schottky diode.

The connection point may be electrically connected to an anode of the second Schottky diode. The second current path optionally only include the connection point and the second Schottky diode.

The first current path and the second current path may meet at a first node. The first node may be electrically connected to a cathode of the first Schottky diode and a cathode of the second Schottky diode. The first node may be directly electrically connected to the electrical component. Alternatively, the first node and the electronic component may be electrically connected via a third current path.

The first current path and the second current path may meet at a second node. The second node may be electrically connected to the connection point and the negative terminal of the first power supply. The electronic component may be directly electrically connected to the second node. Alternatively, the electronic component and the second node may be electrically connected via a fourth current path.

In an example embodiment, the electrical connections between the electronic component, the first power source and the connection point consist only of the first and second current paths. That is to say, the first and second current paths may be the only electrical connection between the electronic component and the first power source and the connection point respectively.

The first power supply may be a battery. Batteries are a portable source of electrical energy, meaning that the electrical power can be provided to the electronic component even if the component is being transported or moved. That is to say, the battery ensures that there is no need for the circuit and/or the electronic component to be continuously connected to a fixed source of power, such as a DC generator. The battery may be a rechargeable battery.

The electronic component may be an electronic control circuit. For instance, the electronic component may be a radio frequency evaluation board, an electronic control unit for a vehicle, e.g. an engine control module, or an electronic control circuit for protecting a refrigeration unit from voltage and/or current surges.

The automatic power supply selection circuit may be used in combination with an external power supply, in which case a positive terminal of the external power supply is preferably electrically connected to the connection point.

The use of the automatic power supply selection circuit in combination with an external power supply, as described above, is seen as an invention in its own right. Accordingly, viewed from another aspect, the invention provides a combination of an external power supply and an automatic power supply selection circuit for automatically selecting a power supply to power an electronic component, the circuit comprising: a first current path including a positive terminal of a first power supply, a reverse biased Zener diode, and a first, forward biased, Schottky diode connected in series; a second current path including a connection point for electrically connecting a positive terminal of the external power supply to the circuit, and a second, forward biased, Schottky diode connected in series; and an electronic component in electrical communication with the first and second current paths; wherein the first current path is connected in parallel with the second current path, and wherein the positive terminal of the external power supply is electrically connected to the connection point.

This aspect of the invention may be combined with any of the previously described features.

The external power supply may be a DC generator. Alternatively, the external power supply may be an external battery or a solar panel.

The invention also extends to a vehicle including the automatic power supply selection circuit as described above. Accordingly, viewed from another aspect, the invention provides a vehicle comprising an automatic power supply selection circuit for automatically selecting a power supply to power an electronic component, the circuit comprising: a first current path including a positive terminal of a first power supply, a reverse biased Zener diode, and a first, forward biased, Schottky diode connected in series; a second current path including a connection point for electrically connecting a positive terminal of an external power supply to the circuit, and a second, forward biased, Schottky diode connected in series; and an electronic component in electrical communication with the first and second current paths; wherein the first current path is connected in parallel with the second current path.

This aspect of the invention may be combined with any of the previously described features. For example, a positive terminal of an external power supply may be electrically connected to the connection point.

The vehicle may be a car, a lorry or a train.

The vehicle may include starter motor. The starter motor may be arranged to start an engine of the vehicle. In an example embodiment, the first power source is arranged to power the starter motor. In arrangements where a battery provides power for the electronic component as well as the starter motor, it is important to ensure that the battery does not become discharged to the point that it can no longer power the starter motor. This is of particular importance when the engine is not running, e.g. when the vehicle is stationary, since it will then no longer be possible to re-start the engine using power from the battery. By providing an automatic power supply selection circuit as described above, when an external power supply is electrically connected to the connection point it is possible to prevent discharge of the battery to ensure that sufficient charge is retained in the battery to power the starter motor.

This invention also extends to a corresponding method of automatically selecting a power supply to power an electronic component. Accordingly, viewed from another aspect, the invention provides a method of automatically selecting a power supply to power an electronic component, the method comprising: using a first current path including a positive terminal of a first power supply, a reverse biased Zener diode, and a first, forward biased, Schottky diode connected in series; using a second current path including a connection point for electrically connecting a positive terminal of an external power supply to the circuit, and a second, forward biased, Schottky diode connected in series; providing an electronic component in electrical communication with the first and second current paths; and automatically selecting which power supply to power the electronic component via the interaction of the first and second current paths and their respective diodes.

The method may be performed using the automatic power supply selection circuit discussed above and thus may have corresponding features.

The method may further comprise electrically connecting a positive terminal of an external power supply to the connection point.

In use, the Zener diode prevents flow of current from the positive terminal of the first power source to the electronic component, via the first current path, when a reverse-bias voltage across the Zener diode is less than the Zener voltage of the Zener diode. The Zener voltage is an inherent property of the Zener diode. On the other hand, when the reverse-bias voltage across the Zener diode is equal to or greater than the Zener voltage of the Zener diode, the Zener diode allows current to flow from the positive terminal of the first power source to the electronic component via the first current path. Hence, the Zener diode can be used to automatically select where current flows in the circuit; through the first current path or the second current path. That is to say, the Zener diode can be used to automatically select a power supply for providing power to the electronic component depending on an output voltage of the first power supply and an output voltage provided to the connection point, which may be provided by an external power supply electrically connected to the connection point. It will be appreciated that when a positive terminal of an external power supply is not electrically connected to the connection point, the output voltage provided to the connection point will be 0V.

Certain preferred embodiments of the present invention will now be described, by way of example only, with reference to the following drawings, in which:
Figure 1 is a circuit diagram showing an electrical circuit capable of automatically selecting between two power sources; and
Figure 2 is a circuit diagram of the electrical circuit of Figure 1 in which an external power supply has been disconnected from the circuit.

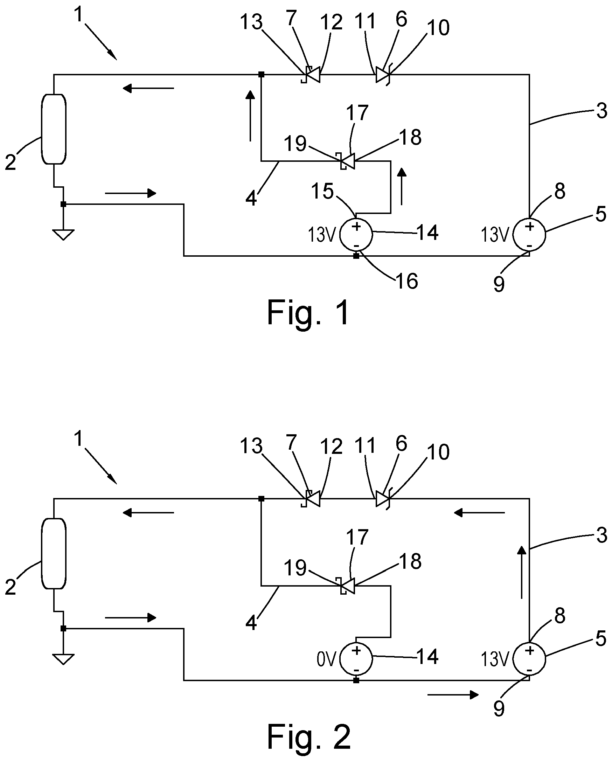

Figure 1 shows an electrical circuit 1 capable of automatically selecting between two power sources in order to supply electrical power to an electronic component 2.

In the following description of the electrical circuit 1, the terms "upstream" and "downstream" will be used to describe the arrangement of electronic components within the electrical circuit 1. These terms refer to the position of a component relative to the direction of flow of conventional current within the electrical circuit 1. For example, where conventional current flowing through the circuit would reach a first component before a second component, the first component is said to be upstream of the second component and the second component is said to be downstream of the first component. Thus, the direction between points on a circuit with a higher potential difference (higher voltage) and a lower potential difference (lower voltage) is the downstream direction, and the upstream direction is the opposite direction.

Electrical connections between electronic components within the electrical circuit 1 may be provided by any suitable means, such as a printed circuit board or electrically conductive wires. For example, the electronic components may be electrically connected by conductive copper wiring.

The electrical circuit 1 comprises an electronic component 2 electrically connected to a first current path 3 and a second current path 4. The first and second current paths 3, 4 are connected in parallel.

The first current path 3 includes a battery 5, a Zener diode 6 and a Schottky diode 7 connected in series. The battery 5 has a positive terminal 8 and a negative terminal 9. The Zener diode 6 has a cathode 10 and an anode 11. The Schottky diode 7 has an anode 12 and a cathode 13.

The Zener diode 6 is arranged downstream of the battery 5, with the cathode 10 of the Zener diode 6 connected to a positive terminal 8 of the battery 5. That is to say, the Zener diode 6 is reverse biased.

The Schottky diode 7 is arranged downstream from the Zener diode 6 such that the anode 12 of the Schottky diode 7 is connected to the anode 11 of the Zener diode. Hence, the Schottky diode 7 is forward biased.

A Schottky diode allows current to flow from its anode to its cathode but prevents current flowing in the opposite direction, i.e. from the cathode to the anode. Conversely, Zener diodes not only allow current to flow through the diode from its anode to its cathode, but also allow current to flow in the opposite direction from its cathode to its anode if the reverse-bias voltage across the diode reaches or exceeds the *Zener voltage.* The Zener voltage is an intrinsic property of a Zener diode, and can be tailored based on the composition and structure of the particular diode.

The second current path 4 includes a Schottky diode 17 connected in series to a connection point 14 for connecting an external power supply to the electrical circuit 1. The external power supply may be, for example, a DC generator. The Schottky diode 17 has an anode 18 and a cathode 19.

Figure 1 shows an external power supply connected to the connection point 14 such that its positive terminal 15 and negative terminal 16 are arranged in the same direction as positive terminal 8 and negative terminal 9 of the battery. That is to say, conventional current from the external power supply will flow through the circuit 1 in the same direction as a flow of conventional current from the battery 5. It is intended for the external power supply to be connected to the circuit 1 via the connection point 14 in this manner.

The Schottky diode 17 is arranged downstream of the connection point 14 such that the anode 18 of the Schottky diode 17 is connected to the positive terminal 15 of the external power supply. Hence, the Schottky diode 17 is forward biased.

If the external power supply is connected incorrectly to the electrical circuit 1, with its negative terminal 16 connected to the anode 18 of the Schottky diode 17, then the Schottky diodes 7, 17 will become reverse biased. In this state, the Schottky diodes 7, 17 will become non-conducting and prevent current from flowing through circuit 1 the from the external power supply.

The operation of the electrical circuit 1 will now be described with reference to Figures 1 and 2.

In the arrangement shown in Figure 1, the battery 5 is a 13 V battery and the circuit 1 is connected to an external power supply having an output voltage of 13 V. Thus, the circuit 1 is connected to an external power supply that provides an output voltage equal to the output voltage of the battery 5. In this example, the Zener diode 6 has a Zener voltage of 3.2 V.

Since the output voltages of the two power supplies are equal, there is no reverse-bias voltage across the Zener diode 6. Hence, the reverse-bias voltage (which is zero) is below the Zener voltage of the Zener diode 6, i.e. 3.2 V. Thus, the Zener diode 6 will prevent current from flowing from its cathode to its anode and no current will flow from the battery 5 to the Schottky diode 7.

Whilst the Zener diode 6 acts to block current flowing from the battery 5 through the first current path 3, the forward biased Schottky diode 17 will allow current to flow from the external power supply to the electronic component 2 through the second current path 4.

Hence, when the output voltage of the battery 5 and the output voltage of the external power supply connected to the connection point 14 are the same then the electronic component 2 will be powered by the external power supply.

Moreover, the electronic component 2 will be powered by the external power supply whenever the reverse-bias voltage across the Zener diode 6 is below the Zener voltage. This criteria is met, for example, if the output voltage of the external power supply is lower than the output voltage of the battery 5 by a value less than the Zener voltage of the Zener diode 6. This criteria is also met if the output voltage of the external power supply is greater than the output voltage of the battery 5. For instance, in this example where the Zener voltage of the Zener diode 6 is 3.2 V and the voltage output of the battery 5 is 13 V, the electronic component 2 will be powered by the external power supply if the output voltage of the external power supply is greater than 9.8 V.

Figure 2 shows the circuit 1 disconnected from the external power supply. That is to say, no external power supply is connected to the circuit 1 via the supply point 14. In this case, the reverse-bias voltage across the Zener diode 6 is 13 V, i.e. above its Zener voltage of 3.2 V. Thus, the Zener diode 6 allows current to flow from its cathode 10 to its anode 11 and current can flow from the battery 5 to the Schottky diode 7. The Schottky diode 7 allows current to flow from its anode 12 to its cathode 13, so current can flow from the battery 5 to the electronic component 2 via the first current path 3 in order to power the electronic component 2.

The electronic component 2 will be powered by the battery 5 whenever the reverse-bias voltage across the Zener diode 6 is equal to or greater than the Zener voltage. This criteria is met so long as the output voltage of an external power supply (when connected to the circuit 1 via the connection point 14) is less than the output voltage of the battery 5 by a value equal to or greater than the Zener voltage of the Zener diode 6. For instance, in this example where the Zener voltage of the Zener diode 6 is 3.2 V and the voltage output of the battery 5 is 13 V, the electronic component will be powered by the battery 5 when the output voltage of the external power supply is 9.8 V or lower.

The arrangement of the Schottky diodes 7, 17 and the Zener diode 6 within the circuit 1 means that the selection of which power supply (either the battery 5 or the external power supply) provides power to the electronic component 2 is automatic. That is to say, no external intervention is required.

The circuit 1 is particularly suited for use in power supply circuitry for powering electronic components in vehicles, such as cars, lorries or trains, which have on-board batteries and where connection to an external power supply can be limited to when the vehicle is stationary. The circuit 1 can be used to automatically select between an on-board battery and an external power supply (when connected) for powering one or more electronic components of the vehicle.

When the vehicle is not connected to an external power supply, for example when the vehicle is travelling, the circuit 1 ensures that the electronic component 2 is powered by the vehicle's on-board battery 5. However, when the vehicle is connected to an external power supply, for example if the vehicle is stationary and connected to a DC generator, the circuit 1 is able to automatically chose between the external power supply and the battery 5 for powering the electronic component 2.

In addition to powering the electronic component 2, the battery 5 may also be arranged to power a starter for starting the vehicle's engine. It is therefore important to avoid discharging the battery 5 when the engine is not operating, for example when the vehicle is stationary. If the battery 5 were to become discharged when the engine is not operating then the battery would not be able to power the starter, and hence it would not be possible to start the engine. Thus, if the battery 5 is discharged it will be impossible to use the battery 5 to start the engine. Accordingly, it is important to avoid using the battery 5, for example to power the electronic component 2, when the vehicle is stationary since this may cause the battery 5 to become discharged and so can make it impossible to start the engine using the battery 5.

To avoid discharging the battery 5, it is common to connect the vehicle to an external power supply, such as a DC generator, when the vehicle is stationary in order to power vehicle components. As discussed above, with reference to Figure 1, if the output voltage of the external power supply is such that the reverse-bias voltage across the Zener diode 6 is less than the Zener voltage then the circuit 1 will automatically ensure that the electronic component 2 is powered by the external power supply rather than the battery 5. Therefore, the circuit ensures that the battery 5 is not discharged when the vehicle is connected to an adequate external power supply, and ensures that the battery 5 retains sufficient charge to power the starter to start the engine when required.

## Claims

1. An automatic power supply selection circuit for automatically selecting a power supply to power an electronic component, the circuit comprising:
a first current path including a positive terminal of a first power supply, a reverse biased Zener diode, and a first, forward biased, Schottky diode connected in series;
a second current path including a connection point for electrically connecting a positive terminal of an external power supply to the circuit, and a second, forward biased, Schottky diode connected in series; and
an electronic component in electrical communication with the first and second current paths;
wherein the first current path is connected in parallel with the second current path.

2. An automatic power supply selection circuit according to claim 1, wherein the positive terminal of the first power supply is electrically connected to a cathode of the Zener diode.

3. An automatic power supply selection circuit according to claim 1 or 2, wherein an anode of the Zener diode is electrically connected to an anode of the first Schottky diode.

4. An automatic power supply selection circuit according to claim 1, 2 or 3, wherein the connection point is electrically connected to an anode of the second Schottky diode.

5. An automatic power supply selection circuit according to any preceding claim, wherein the first current path and the second current path meet at a first node, the first node being electrically connected to a cathode of the first Schottky diode and a cathode of the second Schottky diode.

6. An automatic power supply selection circuit according to any preceding claim, wherein the first current path and the second current path meet at a second node, the second node being electrically connected to the connection point and the negative terminal of the first power supply.

7. An automatic power supply selection circuit according to any preceding claim, wherein the first power supply is a battery.

8. An automatic power supply selection circuit according to any preceding claim, wherein the electronic component is an electronic control circuit.

9. An automatic power supply selection circuit according to any preceding claim, in combination with an external power supply,
wherein the positive terminal of the external power supply is electrically connected to the connection point.

10. A combination according to claim 9, wherein the external power supply a DC generator, an external battery or a solar panel.

11. A vehicle including the automatic power supply selection circuit according to any of claims 1 to 8.

12. A vehicle according to claim 11, wherein the vehicle is a car, a lorry or a train.

13. A vehicle according to claim 11 or 12, further comprising a starter motor, wherein the first power source is arranged to power the starter motor.

14. A method of automatically selecting a power supply to power an electronic component, the method comprising:
using a first current path including a positive terminal of a first power supply, a reverse biased Zener diode, and a first, forward biased, Schottky diode connected in series;
using a second current path including a connection point for electrically connecting a positive terminal of an external power supply to the circuit, and a second, forward biased, Schottky diode connected in series;
providing an electronic component in electrical communication with the first and second current paths; and
automatically selecting which power supply to power the electronic component via the interaction of the first and second current paths and their respective diodes.

15. A method according to claim 15, performed using an automatic power supply selection circuit according to any of claims 1 to 8.
